(19) Europäisches Patentamt
European Patent Office
Office européen des brevets

(11) Veröffentlichungsnummer: **0 434 923 A1**

# (12) EUROPÄISCHE PATENTANMELDUNG

(21) Anmeldenummer: **90120387.7**

(22) Anmeldetag: **24.10.90**

(51) Int. Cl.5: **C08G 69/28**, C08G 69/32, C08G 69/42

(30) Priorität: **23.12.89 DE 3942941**

(43) Veröffentlichungstag der Anmeldung:
**03.07.91 Patentblatt 91/27**

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**W-4370 Marl 1(DE)**

(72) Erfinder: **Poll, Günter, Dr.**
**Venusweg 9**
**W-4370 Marl(DE)**
Erfinder: **Finke, Jürgen, Dr.**
**Münsterlandstrasse 22**
**W-4370 Marl(DE)**

## (54) Verfahren zur Herstellung eines thermoplastisch verarbeitbaren, aromatischen Polyamids.

(57)
2.1 Es sollen aromatische Polyamide mit einer verbesserten Stabilität gegen Thermooxidation bereitgestellt werden.
2.2 Dies wird dadurch erreicht, daß die Polyamide durch Polykondensation der Monomeren in Gegenwart von 0,01 bis 2,0 Mol-% einer Alkyl- oder Aryl-Phosphonsäure, -Phosphonigsäure oder -Phosphinsäure oder eines ihrer Ester oder Halogenide hergestellt werden.
2.3 Mit Hilfe des Verfahrens der Erfindung gelingt es, gegen Thermooxidation stabile, aromatische Polyamide zu erhalten.

EP 0 434 923 A1

## VERFAHREN ZUR HERSTELLUNG EINES THERMOPLASTISCH VERARBEITBAREN, AROMATISCHEN POLYAMIDS

Gegenstand der Erfindung ist ein Verfahren zur Herstellung eines thermoplastisch verarbeitbaren, aromatischen Polyamids durch Polykondensation nachstehender Ausgangsmonomeren:

A HOOC - Ar - COOH

B $H_2N$ - Ar' - $NH_2$

hierbei bedeuten

Ar: 1,3- oder 1,4-Phenylen; 1,4-, 1,5-, 2,6- oder 2,7-Naphthylen,

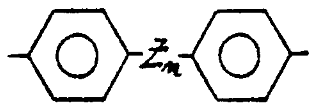

oder

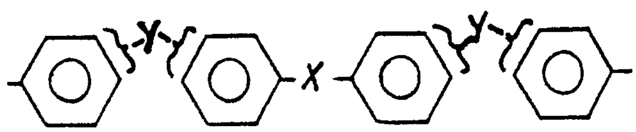

Ar':

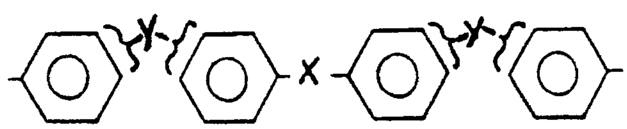

X: $-SO_2-$; $-CO-$

Y: $-O-$; $-S-$

Z: $-O-$; $-S-$; $-SO_2-$; $-CO-$; $-\overset{R}{\underset{R'}{C}}-$

R und R': $-H$; $C_1$- bis $C_4$-Alkyl

n: 0; 1

in der Schmelze in Gegenwart eines Katalysators bei Temperaturen im Bereich von 200 bis 400 °C.

Die Herstellung solcher Polyamide ist grundsätzlich bekannt (siehe beispielsweise DE-OS 36 09 011; Brode et al, Polym. Prepr., Am. Chem. Soc., Div. Polym. Chem. 15, 761 (1974); Adv. Chem. Ser. (1975), 142; CA 84, 5530 sf).

Die Schmelzviskosität dieser aromatischen Polyamide ist allerdings hoch. Daher sind bei ihrer Herstellung und Verarbeitung sehr hohe Temperaturen erforderlich - im allgemeinen mindestens 350 °C. Bei diesen Temperaturen wird häufig eine Schädigung des Produktes beobachtet, erkennbar an Verfärbungen oder einer Verschlechterung der mechanischen Eigenschaften.

Aromatische Polyamide werden als hochtemperaturbeständige Werkstoffe in der Luft- und Raumfahrt, der Automobilindustrie, der Elektro- und Elektronikindustrie eingesetzt, wo sie Temperaturen im Bereich von 200 °C und höher in Gegenwart von Luftsauerstoff ausgesetzt sind. Unter diesen Bedingungen tritt leicht Verfärbung des Produkts bei gleichzeitiger Abnahme der mechanischen Eigenschaften auf.

Es hat bereits zahlreiche Anstrengungen gegeben, diese Mängel zu beseitigen. Insbesondere wurde vorgeschlagen, die Polykondensation der aromatischen Dicarbonsäuren und aromatischen Diamine in Gegenwart von Triphenylphosphit oder einer vom Phosphor abgeleiteten Säure der allgemeinen Formel

$H_3PO_m$ mit m = 2, 3 oder 4 als Katalysator und eines Dialkylaminopyridins als Cokatalysator durchzuführen (DE-OSS 35 39 846, 36 01 011, 36 09 011, 37 31 185, Deutsche Patentanmeldung mit dem Aktenzeichen P 39 35 466.0). Die erhaltenen Polyamide können jedoch den gestellten Anforderungen immer noch nicht voll genügen.

Aufgabe der Erfindung war es, Formmassen auf Basis aromatischer Polyamide bereitzustellen, die die geschilderten Nachteile der Produkte des Standes der Technik nicht aufweisen.

Die Aufgabe wurde dadurch gelöst, daß die Polykondensation zur Herstellung der Polyamide in Gegenwart eines Katalysators aus der Gruppe der Alkyl- oder Aryl-Phosphonsäuren, -Phosphonigsäuren, -Phosphinsäuren, ihrer Ester, ihrer Halogenide und ihrer Gemische durchgeführt wird, wobei der Gehalt des Katalysators 0,01 bis 2,0, vorzugsweise 0,02 bis 1,0 Mol-%, bezogen auf die Summe der Komponenten A und B, beträgt.

Als aromatische Dicarbonsäuren (Komponente A) kommen Isophthalsäure, Terephthalsäure, 1.4-, 1.5-, 2.6-, 2.7-Naphthalindicarbonsäure, 4.4'-Diphenyletherdicarbonsäure oder 4.4'-Benzophenondicarbonsäure, 4.4'-Diphenylsulfondicarbonsäure, 4.4'-Biphenyldicarbonsäure oder Gemische davon in Frage.

Isophthalsäure und Terephthalsäure können in der Phenylengruppe durch Alkoxy, Aryloxy- oder Alkylgruppen substituiert sein. Geeignet ist beispielsweise 2-Phenoxyterephthalsäure.

Als aromatische Diamine (Komponente B) kommen z. B. 4.4'-Bis(p-aminophenoxy)diphenylsulfon, 4.4'-Bis(m-aminophenoxy)diphenylsulfon, 4.4'-Bis(p-aminophenoxy)benzophenon, 4.4'-Bis(m-aminophenoxy)-benzophenon, 4.4'-Bis(p-aminophenylmercapto)benzophenon, 4.4'-Bis(p-aminophenylmercapto)-diphenylsulfon oder Gemische davon in Frage.

Die Komponenten A und B werden üblicherweise in ungefähr äquimolaren Mengen miteinander umgesetzt.

Zur Regelung des Molekulargewichtes können aromatische Monocarbonsäuren (siehe Deutsche Patentanmeldung mit dem Aktenzeichen P 39 35 468.7) oder aromatische Carbonsäureamide der nachstehenden allgemeinen Formel als Komponente C zugesetzt werden. Ihre Menge beträgt im allgemeinen 0,01 bis 10, vorzugsweise 0,05 bis 5 Mol-%, bezogen auf die Summe der Komponenten A und B.

$$Ar - \overset{\overset{O}{\|}}{C} - \overset{\overset{H}{|}}{N} - Ar'$$

Darin bedeuten Ar und Ar' gegebenenfalls substituierte Phenylreste. Geeignete Molekulargewichtsregler sind beispielsweise Benzanilid, 4-Chlorbenzoesäureanilid, Tolylanilid, 4-(p-Benzoylamidophenoxy)-4'-ph enoxy-diphenylsulfonund 2-Naphthalincarbonsäureanilid.

Zur Regelung des Molekulargewichtes können auch aromatische Carbonsäuren, wie beispielsweise Benzoesäure, Naphthalincarbonsäure, Chlorbenzoesäure und/oder aliphatische Carbonsäuren mit 1 bis 20 C-Atomen einerseits im Gemisch mit aromatischen Aminen, wie beispielsweise Anilin, Chloranilin, Naphthylamin, 4-(p-Aminophenoxy)diphenylsulfon, und/oder aliphatische Amine mit 4 bis 20 C-Atomen andererseits eingesetzt werden. Dabei werden Carbonsäure und Amin vorzugsweise in äquimolaren Mengen eingesetzt (siehe DE-OS 38 04 401).

Schließlich kann das Molekulargewicht auch dadurch geregelt werden, daß die Komponente A im Überschuß eingesetzt wird (siehe Deutsche Patentanmeldung mit dem Aktenzeichen P 39 35 467.9).

Als Katalysator werden vorzugsweise Verbindungen der nachstehenden allgemeinen Formeln eingesetzt.

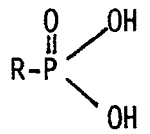

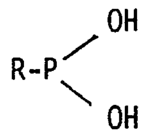

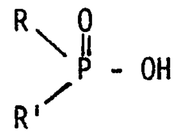

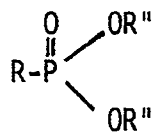

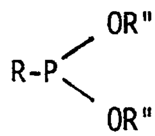

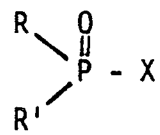

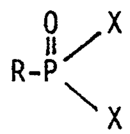

Hierbei bedeuten

R, R' und R" unabhängig voneinander Phenyl, 1- oder 2-Naphthyl, 2-, 3- oder 4-Chlorphenyl, 2-, 3- oder 4-Tolyl, $C_1$- bis $C_{20}$-Alkyl oder -Cycloalkyl

X: Cl; Br

Die Polykondensation wird vorzugsweise in Gegenwart eines Katalysators und zusätzlich eines Cokatalysators aus der Gruppe der Pyridine, welche wenigstens einen elektronenliefernden Substituenten aufweisen, der Zinn(II)-Verbindungen und ihrer Gemische durchgeführt. Der Gehalt des Cokatalysators beträgt 0,01 bis 2,0, vorzugsweise 0,02 bis 1,0 Mol-%, bezogen auf die Summe der Komponenten A und B.

Das Mengenverhältnis von Katalysator und Cokatalysator ist innerhalb der genannten Grenzen frei wählbar. Vorzugsweise setzt man die Phosphorverbindung und das substituierte Pyridin im Molverhältnis 1:1, die Phosphorverbindung und die Zinn(II)-Verbindung im Molverhältnis 1:1 bis 2:1 und die Phosphorverbindung, das substituierte Pyridin und die Zinn(II)-Verbindung im Molverhältnis 1:1:1 bis 1:1:0,5 ein.

Bevorzugte substituierte Pyridine sind Verbindungen der nachstehenden allgemeinen Formel.

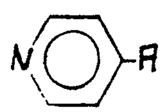

Hierbei bedeuten

A: 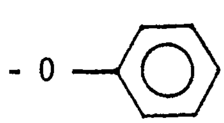 ; 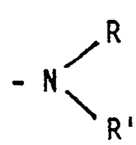

R und R' : $C_1$-bis $C_{20}$-Alkyl oder -Cycloalkyl.

Bevorzugte Zinn(II)-Verbindungen sind Salze von organischen Mono- oder Dicarbonsäuren mit 2 bis 16 C-Atomen im Kohlenstoffgerüst, wie beispielsweise Zinndioctanoat, Zinndilaurat, Zinndodecandioat und Zinnoxalat, sowie Zinnalkoholate, wie beispielsweise Zinnglykolat.

Es wurde überraschenderweise gefunden, daß die Katalysatoren und die Katalysator/Cokatalysator-Kombinationen des Verfahrens der Erfindung den herkömmlichen Katalysatoren hinsichtlich ihrer Aktivität deutlich überlegen sind. Die nach dem Verfahren der Erfindung hergestelltenPolyamide weisen eine deutlich verbesserte Temperaturstabilität auf, so daß sie ohne Schädigung, d. h. ohne Dunkelfärbung und Abnahme des Molekulargewichtes, bei Temperaturen über 340 °C verarbeitet werden können. Dabei nimmt die Lösungsviskosität, welche ein Maß für das Molekulargewicht ist, nicht ab.

Im Spritzguß hergestellte Prüfkörper aus einem Polyamid, das nach dem in der DE-OS 36 09 011 offenbarten Verfahren hergestellt wurde, zeigten bereits nach einer Lagerung von 24 h bei 200 °C in Luft intensive Braunfärbung. Demgebenüber zeigte ein Prüfkörper aus einem vergleichbaren Polyamid der Erfindung unter entsprechenden Prüfbedingungen keine Veränderung.

Die Erfindung wird durch die folgenden Beispiele erläutert. Die nicht erfindungsgemäßen Vergleichsbeispiele werden mit großen Buchstaben bezeichnet.

Die Viskositätszahlen (J) wurden an 0,5-gewichtsprozentigen Lösungen der Polyamide in einem Phenol/o-Dichlorbenzol-Gemisch (Gewichtsverhältnis 1:1) bei 25 °C nach DIN 53 728 bestimmt.

## Beispiele:

### Beispiel 1:

21,62 g (0,05 Mol) 4.4'-Bis(p-aminophenoxy)diphenylsulfon und 8,64 g (0,052 Mol) Isophthalsäure wurden mit 48 mg (0,0005 Mol) Methylphosphonsäure (K1) in einem Polykondensationsreaktor mit Rührer, Stickstoffeinleitung und Destillationsbrücke bei 250 °C aufgeschmolzen. Die Temperatur wurde nach 20 Minuten auf 300 °C erhöht. Dabei nahm die Viskosität der Schmelze stetig zu, während das im Verlauf der Reaktion freiwerdende Wasser abdestilliert wurde. Nach 30 Minuten bei 300 °C wurde die Reaktion abgebrochen.

Die Viskositätszahl (J) betrug 28 $cm^3/g$. Festphasennachkondensation bei 250 °C und 0,5 mbar lieferte nach 24 h ein Polyamid mit J = 71 $cm^3/g$.

### Beispiele 2 bis 15 und Vergleichsbeispiele A und B

Die Beispiele 2 bis 15 und die Vergleichsbeispiele A und B wurden analog Beispiel 1 durchgeführt, jedoch wurden die Katalysatoren gemäß nachstehender Tabelle variiert. Die hier eingesetzten Katalysatoren (K) und Cokatalysatoren (CP und CZ) entsprechen den nachstehenden Formeln.

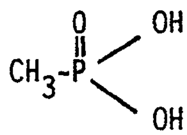

Methylphosphonsäure (K1)

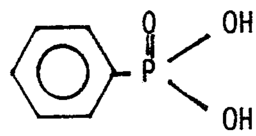

Phenylphosphonsäure (K2)

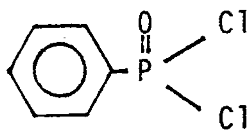

Phenylphosphonsäuredichlorid (K3)

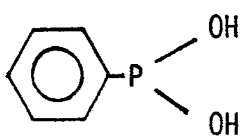

Phenylphosphonig-säure (K4)

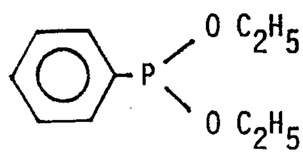

Phenylphosphonig-säurediethylester (K5)

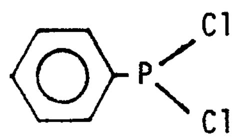

Phenylphosphonig-säuredichlorid (K6)

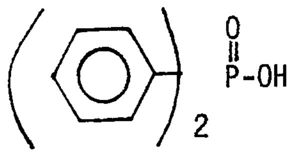

Diphenylphosphinsäure (K7)

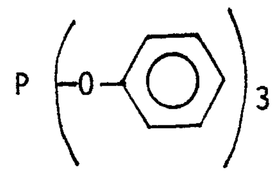

Triphenylphosphit (TPP)

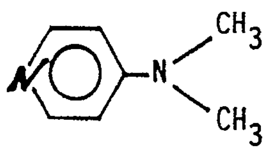

4-Dimethylaminopyri-din (CP1)

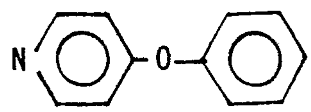

4-Phenoxypyridin (CP2)

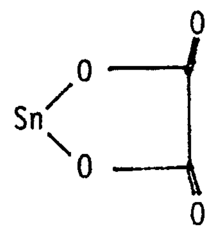

Zinnoxalat (CZ)

| Beispiel | (Co)Katalysatoren K | CP | CZ | Mol-% K | CP | CZ | J [cm³/g] | J *) [cm³/g] |
|---|---|---|---|---|---|---|---|---|
| 1 | K1 | - | - | 1,0 | - | - | 28 | 71 |
| 2 | K2 | - | - | 0,6 | - | - | 34 | 86 |
| 3 | K4 | - | - | 1,0 | - | - | 27 | 68 |
| 4 | K7 | - | - | 1,0 | - | - | 30 | 78 |
| 5 | K3 | - | - | 0,5 | - | - | 38 | 81 |
| 6 | K5 | - | - | 0,5 | - | - | 26 | 69 |
| 7 | K6 | - | - | 0,5 | - | - | 31 | 75 |
| 8 | K1 | CP1 | - | 0,5 | 0,5 | - | 30 | 104 |
| 9 | K1 | CP1 | CZ | 0,5 | 0,5 | 0,5 | 30 | 88 |
| 10 | K2 | CP1 | - | 0,2 | 0,2 | - | 30 | 78 |
| 11 | K2 | - | CZ | 0,5 | - | 0,25 | 26 | 104 |
| 12 | K4 | CP2 | - | 0,5 | 0,5 | - | 36 | 84 |
| 13 | K7 | CP1 | CZ | 1,0 | 1,0 | 1,0 | 40 | 96 |
| 14 | K3 | CP1 | - | 0,5 | 0,5 | - | 37 | 82 |
| 15 | K5 | - | CZ | 0,5 | - | 0,5 | 29 | 75 |
| A | TPP | - | - | 1,0 | - | - | 26 | 58 |
| B | $H_3PO_3$ | - | - | 1,0 | - | - | 24 | 49 |

*) nach Festphasennachkondensation

Die in den Beispielen 1 bis 15 und den Vergleichsbeispielen A und B hergestellten Polyamide wurden bei 310 °C und einem Druck von 100 bar zu Platten von 1 mm Dicke verpreßt und in einem Umluftofen mit ca. 10 % Frischluftzufuhr 24 h bei 200 °C gelagert. Die zum Vergleich hergestellten Polyamide waren dunkelbraun verfärbt, während die nach den Beispielen 1 bis 15 hergestellten Polyamide praktisch keine Veränderungen aufwiesen.

**Ansprüche**

**1.** Verfahren zur Herstellung eines thermoplastisch verarbeitbaren, aromatischen Polyamids durch Polykondensation nachstehender Ausgangsmonomeren:

A HOOC - Ar - COOH

B $H_2N$ - Ar' - $NH_2$

hierbei bedeuten

Ar: 1,3- oder 1,4-Phenylen; 1,4-, 1,5-, 2,6- oder 2,7-Naphthylen,

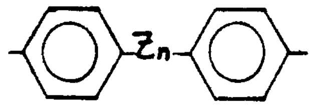

oder

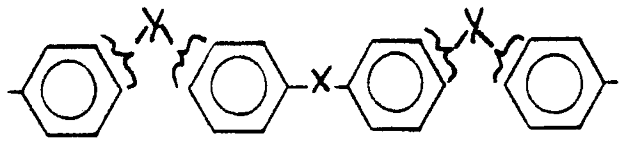

Ar': 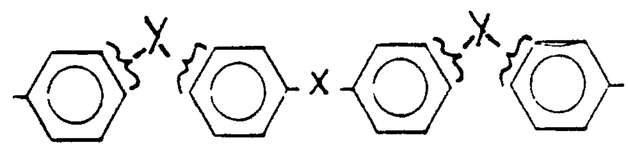

X: $-SO_2-$; $-CO-$

Y: $-O-$; $-S-$

Z: $-O-$; $-S-$; $-SO_2-$; $-CO-$; $-\overset{R}{\underset{R'}{C}}-$

R und R': $-H$; $C_1$- bis $C_4$-Alkyl

n: 0; 1

in der Schmelze in Gegenwart eines Katalysators bei Temperaturen im Bereich von 200 bis 400 °C, dadurch gekennzeichnet,
daß die Polykondensation in Gegenwart eines Katalysators aus der Gruppe der Alkyl- oder Aryl-Phosphonsäuren, -Phosphonigsäuren, -Phosphinsäuren, ihrer Ester, ihrer Halogenide und ihrer Gemische durchgeführt wird, wobei der Gehalt des Katalysators 0,01 bis 2,0 Mol-%, bezogen auf die Summe der Komponenten A und B, beträgt.

**2.** Verfahren nach Anspruch 1,
dadurch gekennzeichnet,
daß der Gehalt des Katalysators 0,02 bis 1,0 Mol-% beträgt.

**3.** Verfahren nach Anspruch 1 oder 2,
dadurch gekennzeichnet,
daß als Katalysator Verbindungen der allgemeinen Formeln

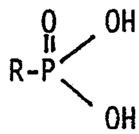
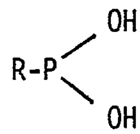
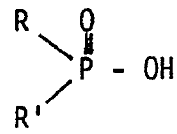

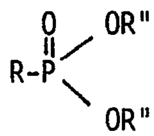
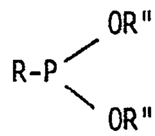
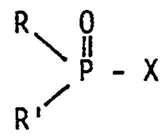

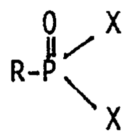

wobei

| | |
|---|---|
| R, R' und R" | unabhängig voneinander Phenyl, 1- oder 2-Naphthyl, 2-, 3- oder 4-Chlorphenyl, 2-, 3- oder 4-Tolyl, $C_1$-bis $C_{20}$-Alkyl oder -Cycloalkyl |
| X: | Cl oder Br bedeuten, |

eingesetzt werden.

**4.** Verfahren nach einem der Ansprüche 1 bis 3,
dadurch gekennzeichnet,
daß die Polykondensation in Gegenwart eines Katalysators und zusätzlich eines Cokatalysators aus der Gruppe der Pyridine, welche wenigstens einen elektronenliefernden Substituenten aufweisen, der Zinn-(II)-Verbindungen und ihrer Gemische durchgeführt wird, wobei der Gehalt des Cokatalysators 0,01 bis 2,0 Mol-%, bezogen auf die Summe der Komponenten A und B, beträgt.

**5.** Verfahren nach Anspruch 4,
dadurch gekennzeichnet,
daß der Gehalt des Cokatalysators 0,02 bis 1,0 Mol-% beträgt.

**6.** Verfahren nach Anspruch 4 oder 5,
dadurch gekennzeichnet,
daß als substituierte Pyridine Verbindungen der allgemeinen Formel

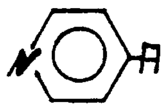

wobei

A: 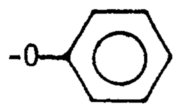 ; 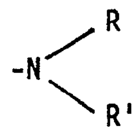

R und R' : $C_1$-bis $C_{20}$-Alkyl oder -Cycloalkyl bedeuten, eingesetzt werden.

**7.** Verfahren nach einem der Ansprüche 1 bis 6, dadurch gekennzeichnet, daß als Zinn(II)-Verbindungen Salze von organischen Mono- oder Dicarbonsäuren mit 2 bis 16 C-Atomen im Kohlenstoffgerüst oder Zinnalkoholate eingesetzt werden.

Europäisches Patentamt

# EUROPÄISCHER RECHERCHENBERICHT

Nummer der Anmeldung

**EP 90 12 0387**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 307 575 (HULS AKTIENGESELLSCHAFT) * Ansprüche 1-10 & DE-A-3731185 (cat.D) * | 1-6 | C 08 G 69/28<br>C 08 G 69/32<br>C 08 G 69/42 |
| | | | **RECHERCHIERTE SACHGEBIETE (Int. Cl.5)** |
| | | | C 08 G |

Der vorliegende Recherchenbericht wurde für alle Patentansprüche erstellt

| Recherchenort | Abschlußdatum der Recherche | Prüfer |
|---|---|---|
| Den Haag | 18 März 91 | GLANDDIER A. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument